# EUROPEAN PATENT APPLICATION

(11) **EP 4 106 069 A1**
(43) Date of publication of application: **21.12.2022**
(21) Application number: 21859551.0
(22) Date of filing: 22.03.2021
(51) Int. Cl.: H01M 10/0565, H01M 10/0525, H01M 4/139, H01M 4/04, C08F 290/06, C08F 218/00, C08F 222/14, C08F 228/02, C08F 222/20, C08F 265/06

(54) **GEL ELECTROLYTE PRECURSOR AND APPLICATION THEREOF**

(30) Priority: 28.08.2020 CN 202010886009
(71) Applicant: SVOLT ENERGY TECHNOLOGY CO., LTD, Changzhou, Jiangsu 213200 (CN)
(72) Inventor: LV, Wenbin, hangzhou, Jiangsu 213200 (CN); DENG, Suxiang, hangzhou, Jiangsu 213200 (CN); YANG, Hongxin, hangzhou, Jiangsu 213200 (CN)
(74) Representative: Cabinet Beaumont
(86) International application number: PCT/CN2021/082181
(87) International publication number: WO 2022/041702

(57) **Abstract**

Provided in the present disclosure are a gel electrolyte precursor and an application thereof. The gel electrolyte precursor comprises a gel skeleton monomer, a flexible additive, a crosslinking agent, a polymerization initiator, and a lithium salt. Applying same to a semi-solid battery can reduce the amount of electrolyte while ensuring the electrical performance of the battery, thereby achieving the purpose of improving battery safety performance.

## Description

### TECHNICAL FIELD

The present disclosure belongs to the field of battery materials, and relates to a gel electrolyte precursor and an application thereof.

### BACKGROUND

With the rapid development and progress of society, the problems of energy shortage and environmental pollution have been increasingly serious, and there is more and more urgent need for clean energy; meanwhile, new energy vehicles are increasingly popular, and the development of energy power is gradually expanding, which requires the development of lithium ion batteries with higher energy density. At present, commercial lithium batteries has hit an energy density bottleneck, and it is difficult to improve in terms of high energy density. As the next-generation battery, solid batteries have been pushed to the forefront, but solid batteries have lots of difficulty in developing, have high requirements on the process, and cannot achieve mass production at present; as a result, it gave a rise to semi-solid batteries as an interim product.

There is a spate of spontaneous combustion of new energy vehicles, and people have been trying to develop novel batteries which are safer. All-solid-state batteries have attracted widespread attention because the batteries do not contain electrolyte components and can exist more stably inside the cells; however, currently, the all-solid battery technology is still immature, and there is still a long way to go before industrialization. As an intermediate product between liquid batteries and all-solid batteries, semi-solid batteries can reduce the amount of electrolyte liquid inside the cells and improve the cell safety to a certain extent, which are the closest and easiest interim product to mass production so far.

Solid batteries can be divided into two main classes according to the preparation method: 1) semi-solid batteries; 2) all-solid batteries, in which, for the all-solid batteries, the positive and negative separators are in solid-solid contact, and the Li⁺ conduction has large resistance, so that the all-solid batteries are hard to reach the level of traditional liquid batteries currently; the semi-solid batteries, as an interim between traditional liquid batteries and all-solid batteries, are better than the all-solid batteries in preparation operability, battery rate capability performance and cycle performance.

As an interim product from traditional liquid batteries to all-solid batteries, the semi-solid batteries need to have both excellent rate capability performance and cycle performance of traditional liquid batteries, and have the safety performance of all-solid batteries at the same time. In order to improve the battery in safety performance, the amount of electrolyte liquid should be minimized. Electrolyte liquid is the substance with the lowest flash point and the lowest boiling point in the battery system, and it is also the most combustible substance; hence, it is an important means to reduce the amount of liquid electrolyte for improving the battery in safety performance, and the gel electrolyte has attracted much attention as a safe electrolyte.

Therefore, it has a great significance to develop a gel electrolyte precursor that can be applied to semi-solid batteries, gives the batteries electrical performances comparable to traditional liquid batteries, and has higher safety performance.

### SUMMARY

The present disclosure provides a gel electrolyte precursor and an application thereof.

In an embodiment, the present disclosure provides a gel electrolyte precursor, and the gel electrolyte precursor includes a gel skeleton monomer, a flexible additive, a crosslinking agent, a polymerization initiator and a lithium salt; the gel skeleton monomer includes at least one of vinylene carbonate, vinylethylene carbonate, propenyl-1,3-sultone, methyl methacrylate and maleic anhydride; the flexible additive is selected from a polyacrylate material containing double bonds, a molecular weight of which is less than or equal to 5000.

In an embodiment, the flexible additive is at least one of poly(ethylene glycol) methacrylate, poly(ethylene glycol) diacrylate, methoxy polyethylene glycol acrylate, trimethylolpropane ethoxylate triacrylate, propoxylated trimethylolpropane triacrylate and 2,3-glycidyl acrylate, a molecular weight of which is less than or equal to 5000 (such as 400, 500, 600, 800, 1000, 1200, 1500, 2000, 2500, 3000, 3500, 4000, 4500 or 5000, etc.).

Electrolyte liquid is the substance with the lowest flash point and the lowest boiling point in the battery system, the flash point of which can be as low as 80°C, and it is also the most combustible substance; during the use of battery, electrolyte liquid is the main cause of safety problems, so that most safety problems can be avoided by reducing the amount of electrolyte liquid.

In an embodiment provided by the present disclosure, the gel skeleton monomer serves as the framework of the gel electrolyte, the flexible additive acts to soften the gel electrolyte, and the crosslinking agent exerts a crosslinking effect; subsequently, the gel electrolyte precursor is mixed with the electrolyte liquid, and then subjected to in-situ polymerization gelation and baking, so as to obtain a gel electrolyte with an elastic porous structure; the gel electrolyte can absorb electrolyte liquid inside the battery, thereby reducing the free electrolyte liquid in the battery, and improving the safety performance of the battery due to the reduction in the electrolyte amount. Meanwhile, the absorbed electrolyte liquid and the elastic porous gel electrolyte form a new gel electrolyte, which has high electrical conductivity, ensures the rate capability performance of the battery, and enables the prepared battery to have high electrical performances.

In an embodiment provided by the present disclosure, after mixed with the electrolyte liquid, the gel electrolyte precursor can be uniformly dip-coated on a positive electrode sheet and/or a negative electrode sheet.

In an embodiment provided by the present disclosure, the semi-solid battery, which is prepared by using the gel electrolyte precursor of the present disclosure, has basically same initial efficiency and rate capability performance as the liquid battery, and the electrical performances of the battery are not affected; the gel electrolyte prepared from the gel precursor of the present disclosure can fix the electrolyte liquid in the battery, so that the electrolyte liquid cannot move freely in the battery, reducing the free electrolyte liquid outside the bare cell, and reducing the safety problems in the safety test, and the safety performance is significantly better than that of the liquid battery.

In an embodiment, the gel skeleton monomer is vinylene carbonate. As shown in the following formula 1), vinylene carbonate opens up double bonds to form a chain under the effect of polymer initiator, and gets rid of the volatile component through baking during the subsequent baking process, and the volatile component forms pores in the gel electrolyte, while the polymer framework structure is retained, forming the skeleton structure with elasticity and pores.

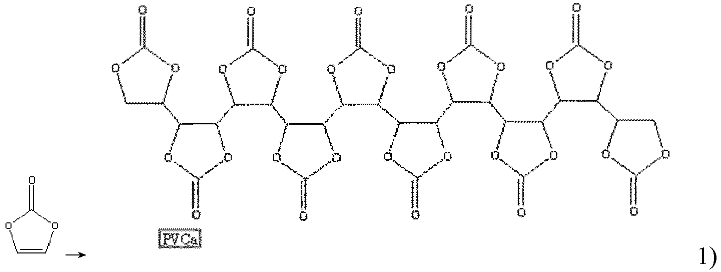

In an embodiment, the flexible additive is a combination of trimethylolpropane ethoxylate triacrylate and propoxylated trimethylolpropane triacrylate.

In an embodiment, the molecular weight of the flexible additive is 500-5000.

In an embodiment provided by the present disclosure, the flexible additive uses the double bond-containing polyacrylic material with the above molecular weight; during the in-situ polymerization gelation of the gel electrolyte precursor, the flexible additive with higher molecular weight is connected to one end of the skeleton structure; the flexible additive with higher molecular weight can soften the skeleton structure, and play a role in softening the electrolyte material, and the glass transition temperature of the electrolyte can be reduced by increasing the flexibility of the electrolyte, so as to improve the electrical conductivity; when the flexible additive; when the molecular weight of the flexible additive is greater than 5000, in the process of dip coating electrode sheet, due to the large molecular weight, the molecular will have a relatively large volume accordingly, which will seriously affect the viscosity of gel precursor, and it will take a long time to wet the electrode sheet, the distribution will be extremely uneven on the inside and outside of the electrode sheet, and it is difficult to fully wet the overall structure of the electrode sheet.

In an embodiment, the crosslinking agent is selected from an acrylate material containing two or more double bonds, such as 2, 3 or 4.

In an embodiment, the crosslinking agent is at least one of 1,6-hexanediol diacrylate, triethylene glycol diacrylate, trimethylolpropane ethoxylate triacrylate, propoxylated trimethylolpropane triacrylate and pentaerythritol tetraacrylate. Among them, trimethylolpropane ethoxylate triacrylate may be used not only as a flexible additive, but also as a crosslinking agent.

In an embodiment provided by the present disclosure, the crosslinking agent uses an acrylate material containing two or more double bonds; taking a polyacrylate material containing two double bonds as an example, the two double bonds can connect with different skeleton chains, thereby achieving the cross-linking effect of connecting different skeletons and forming a network structure, and during the volatilization of the solvent with low boiling point, more pores can be formed, improving the material in elasticity and pores.

In an embodiment, the polymerization initiator is selected from azobisisobutyronitrile (AIBN) and/or azobisisoheptanenitrile (V65).

In an embodiment, the polymerization initiator is azobisisobutyronitrile.

In an embodiment, the lithium salt is selected from at least one of lithium perchlorate (LiClO₄), lithium bis(trifluoromethanesulfonyl)imide (LiTFSI), lithium bis(fluorosulfonyl)imide (LiFSI), lithium bis(oxalato)borate (LiBOB) and lithium tetrafluoroborate (LiBF₄).

In an embodiment, the lithium salt is lithium bis(trifluoromethanesulfonyl)imide.

In an embodiment provided by the present disclosure, the gel electrolyte precursor includes the above lithium salt, which can dissolve in the gel electrolyte precursor and dissociate lithium ions, and has high thermal stability, facilitating to forming stable gel electrolyte, and has high electrical conductivity, resulting in that the lithium ion battery has high rate capability performance.

In a lithium ion battery, electrolyte conductance requires freely mobile lithium ions, the lithium salt of the present disclosure is used to provide mobile lithium ions, and it is a current common method to use lithium salts for providing a lithium ion source. The commonality of lithium ion sources is certainly to contain lithium ions, and the lithium ion source should also be capable of dissolving in the gel electrolyte precursor and dissociating lithium ions. In the present disclosure, different lithium salts may be selected according to the size of their anions, and they have differences in both dissociation degree and conductivity rate; besides, the lithium salt needs to be stable at high temperature in the present disclosure, and the above lithium salts are stable at high temperature; however, lithium hexafluorophosphate has the problem of instability and easy decomposition at high temperature, so that it is not recommended to use.

In an embodiment, based on that a total molar amount of the gel skeleton monomer, the flexible additive, the crosslinking agent and the polymerization initiator is 100%, the gel electrolyte precursor includes the following components:
gel skeleton monomer 50-99.9%
flexible additive 0.1-50%
crosslinking agent 0.1-50%
polymerization initiator 0.1-10%.

In an embodiment provided by the present disclosure, in the gel precursor, based on that a total molar amount of the gel skeleton monomer, the flexible additive, the crosslinking agent and the polymerization initiator is 100%, in the gel electrolyte precursor, a mole percentage of the gel skeleton monomer is 50-99.9%, such as 55%, 60%, 65%, 70%, 75%, 80%, 85%, 90% or 95%, etc.; a mole percentage of the flexible additive is 0.1-50%, such as 0.5%, 1%, 5%, 10%, 15%, 20%, 25%, 30%, 35%, 40% or 45%, etc.; a mole percentage of the crosslinking agent is 0.1-50%, such as 0.5%, 1%, 5%, 10%, 15%, 20%, 25%, 30%, 35%, 40% or 45%; a mole percentage of the polymerization initiator is 0.1-10%, such as 0.5%, 1%, 3%, 5%, 7% or 9%, etc.

In an embodiment, based on that a total molar amount of the gel skeleton monomer, the flexible additive, the crosslinking agent and the polymerization initiator is 100%, the gel electrolyte precursor includes the following components:
gel skeleton monomer 80-95%
flexible additive 2-10%
crosslinking agent 2-10%
polymerization initiator 0.1-3%.

In an embodiment provided by the present disclosure, in the gel precursor, based on that a total molar amount of the gel skeleton monomer, the flexible additive, the crosslinking agent and the polymerization initiator is 100%, in the gel electrolyte precursor, a mole percentage of the gel skeleton monomer is 80-95%, such as 85% or 90%, etc.; a mole percentage of the flexible additive is 2-10%, such as 3%, 4%, 5%, 6%, 7%, 8% or 9%, etc.; a mole percentage of the crosslinking agent is 2-10%, such as 3%, 4%, 5%, 6%, 7%, 8% or 9%, etc.; a mole percentage of the polymerization initiator is 0.1-3%, such as 0.5%, 1% or 2%, etc.

In an embodiment, a ratio of a molar amount of the lithium salt to a volume of the gel skeleton monomer is 0.1-2 mol/L, such as 0.3 mol/L, 0.5 mol/L, 0.8 mol/L, 1 mol /L, 1.2 mol/L, 1.5 mol/L or 1.8 mol/L, etc.

In an embodiment, a ratio of a molar amount of the lithium salt to a volume of the gel skeleton monomer is 0.5-1.5 mol/L.

In an embodiment provided by the present disclosure, by ensuring that each component of the gel electrolyte precursor satisfies the above-mentioned composition, the gel electrolyte precursor is conducive to subsequent in-situ-polymerization gelation, and baking to form an elastic porous structure; furthermore, it is beneficial to absorb the electrolyte liquid in the battery, forming a new gel electrolyte, keeping high conductivity rate, and guaranteeing the rate capability performance of the battery; additionally, the amount of electrolyte liquid is reduced, the free electrolyte liquid outside the bare cell is reduced, and the safety performance of the battery is improved.

In an embodiment, the present disclosure provides a solution for preparing a gel electrolyte, and the solution includes the gel electrolyte precursor according to an embodiment and an electrolyte liquid.

In an embodiment provided by the present disclosure, the gel electrolyte precursor is mixed with an electrolyte liquid, and subjected to gelation treatment to give a gel electrolyte. There is no limitation on a ratio of the electrolyte liquid, and for example, a solvent of the electrolyte liquid may be a mixture of ethylene carbonate (EC), dimethyl carbonate (DMC) and ethyl methyl carbonate (EMC) (for example, EC:DMC:EMC=2:4:4), in which a content of lithium hexafluorophosphate (LiPF₆) is 1.15 mol/L, and 7wt% fluoroethylene carbonate (FEC) is also contained.

In an embodiment, a mass ratio of the gel electrolyte precursor to the electrolyte liquid is 0.1:9.9-9.9:0.1 in the solution for preparing a gel electrolyte, such as 1:9, 2:8, 3:7, 5:5, 6:4, 7:3, 8:2 or 9:1, etc.

In an embodiment, a mass ratio of the gel electrolyte precursor to the electrolyte liquid is 4:6-6:4 in the solution for preparing a gel electrolyte.

In an embodiment, the solution for preparing a gel electrolyte is prepared by a method, which includes mixing the gel electrolyte precursor and the electrolyte liquid, so as to obtain the solution for preparing a gel electrolyte.

In an embodiment, the present disclosure provides a method of preparing a gel electrolyte, and the method includes subjecting the solution for preparing a gel electrolyte according to an embodiment to in-situ-polymerization gelation, and then baking the same, so as to obtain a gel electrolyte.

In an embodiment provided by the present disclosure, the gel electrolyte precursor is mixed with the electrolyte liquid, and then subjected to in-situ polymerization gelation and baking, so as to obtain a gel electrolyte with an elastic porous structure; the gel electrolyte can absorb electrolyte liquid inside the battery, thereby reducing the free electrolyte liquid in the battery, and improving the battery in safety performance.

In an embodiment, a temperature of the in-situ-polymerization gelation is 70-75°C, such as 71°C, 72°C, 73°C or 74°C, etc.

In an embodiment, the baking is vacuum baking.

In an embodiment, a vacuum degree of the vacuum baking is less than or equal to 0.1 kPa, such as 0.01 kPa, 0.03 kPa, 0.05 kPa or 0.08 kPa, etc.

In an embodiment, a temperature of the baking is 80-85°C, such as 81°C, 82°C, 83°C or 84°C, etc.

In an embodiment provided by the present disclosure, the gel electrolyte precursor is mixed with the electrolyte liquid and subjected to in-situ-polymerization gelation, and then baked to remove part of solvents in the electrolyte liquid through volatilization, forming an elastic porous gel electrolyte, and the semi-solid battery, assembled from the gel electrolyte, only needs a small amount of electrolyte liquid.

In an embodiment, the present disclosure provides a gel electrolyte prepared by the method according to an embodiment, and the gel electrolyte has a porous structure.

In an embodiment, the gel electrolyte has an elastic porous structure. The elastic porous gel electrolyte can absorb the electrolyte liquid, and the absorbed electrolyte liquid and the elastic porous gel electrolyte form a new gel electrolyte, which has high electrical conductivity, ensures the rate capability performance of the battery.

The above elastic porous gel electrolyte can absorb the electrolyte liquid, thereby reducing the free electrolyte liquid in the battery; meanwhile, the absorbed electrolyte liquid and the elastic porous gel electrolyte form a new gel electrolyte, which ensures high electrical conductivity of the electrolyte, ensures electrical performances of the battery, reduces the amount of the electrolyte liquid, and improves the battery in safety performance.

The gel electrolyte in the present disclosure may be applied to a positive electrode and/or a negative electrode of the battery; for example, both the positive electrode and the negative electrode use the gel electrolyte in the present disclosure, or any one of the positive electrode or the negative electrode uses the gel electrolyte in the present disclosure, and the other electrode sheet uses other electrolyte, and for example, the other electrode sheet uses other gel electrolyte, or does not use gel electrolyte or uses other type of electrolyte, etc.

In an embodiment, the present disclosure provides a method of preparing an electrode sheet including a gel electrolyte according to an embodiment, and the method includes: coating an electrode sheet with the solution for preparing a gel electrolyte according to an embodiment, subjecting the same to in-situ polymerization, and drying the same, so as to obtain an electrode sheet including a gel electrolyte.

In an embodiment, the electrode sheet includes a positive electrode sheet and/or a negative electrode sheet.

The electrode sheet here is a prepared positive electrode sheet and/or a prepared negative electrode sheet.

In an embodiment provided by the present disclosure, the gel electrolyte precursor may be applied to the any positive and negative electrode materials of lithium ion battery; for example, the positive electrode active material may be lithium cobalt oxide (LCO), lithium nickel oxide (LNO), lithium manganite oxide (LMO), nickel cobalt manganese (NCM) or a high nickel system; the negative electrode active material may be the following systems, such as artificial graphite, natural graphite, silicon oxygen, silicon carbon or lithium metal, etc.

In an embodiment, a method of the coating includes dip coating.

In an embodiment, the dip coating includes placing the electrode sheet into a solution for preparing a gel electrolyte.

In an embodiment provided by the present disclosure, during the dip coating process of the electrode sheet, the electrode sheet is immersed in a solution for preparing a gel electrolyte, and in this process, the electrode sheet fully absorbs a mixed solution of the gel electrolyte precursor and the electrolyte liquid based on capillary effect; after standing for sufficient time, the electrode sheet is taken out from the aluminum laminated film, the surface of the electrode sheet is wiped, and the dip coating of the electrode sheet is completed; the positive electrode sheet and the negative electrode sheet have the same dip coating method.

In an embodiment, the electrode sheet is vertically placed in a solution for preparing a gel electrolyte.

In an embodiment, the method further includes wiping the surface of the electrode sheet after the dip coating.

In an embodiment, the wiping is performed with dustless paper.

In an embodiment, a temperature of the in-situ polymerization is 70-75°C, such as 70°C, 71°C, 72°C, 73°C, 74°C or 75°C, etc.

In an embodiment provided by the present disclosure, the temperature of the in-situ polymerization is controlled within the above range, which is conducive to rapid gelation; with an excessively low polymerization temperature, the gelation process will be long, affecting the process time and process capability; with an excessively high polymerization temperature, the polymerization reaction will be too violent, the polymerization cannot be fully completed, and the gel may not be formed, and failure to form a good gel system will be against the battery safety.

The positive electrode sheet here can have different in-situ polymerization conditions of the gel electrolyte; for example, the negative electrode sheet has an in-situ polymerization condition of in-situ polymerization at 75°C for 24 h, and the positive electrode sheet has an in-situ polymerization condition of in-situ polymerization at 60°C for 17 h.

In an embodiment, the electrode sheet after dip coating is placed in an aluminum laminated film before the in-situ polymerization starts; the aluminum laminated film here is a clean aluminum laminated film.

In an embodiment, a time of the in-situ polymerization is 16-32 h, such as 17 h, 19 h, 21 h, 24 h, 28 h or 30 h, etc.

In an embodiment, the method further includes wiping an electrode tab of the electrode sheet after the in-situ polymerization.

In an embodiment, a solvent for wiping the electrode tab of the electrode sheet is dimethyl sulfoxide.

During the dip coating process, the precursor may stick to the tab, which will affect the subsequent welding performance; by using the above solvent to wipe the tab after in-situ polymerization here, the quality of subsequent welding can be guaranteed. If there were a method protecting the tab form sticking, this step would be removed.

In an embodiment, the method further includes drying after the in-situ polymerization.

In an embodiment, the electrode sheet after in-situ polymerization is wrapped with dustless paper before the drying.

The drying processes of the positive electrode sheet and the negative electrode sheet are performed in different ovens to avoid cross-contamination; and after drying, if not used immediately, the electrode sheet needs to be packaged with an aluminum laminated film to avoid absorbing moisture in the air.

In an embodiment, the drying is vacuum drying.

In an embodiment, a temperature of the drying is 80-85°C, such as 82°C, 84°C or 85°C, etc. The vacuum drying is performed at the above temperature here to remove part of the solvent in the electrolyte liquid, thereby forming an electrode sheet including an elastic porous gel electrolyte; when the temperature is excessively low, the components with low boiling point cannot be volatilized completely, the porous structure cannot be formed well, and after adding electrolyte liquid in the later stage, the electrolyte liquid cannot fully wet the gel electrolyte, and for the battery system, the conductivity rate will be low and the rate capability performance will be affected; when the temperature is excessively high, the lithium salt structure will be destroyed in the electrolyte, the electrolyte elasticity will be destroyed, the electrolyte will become brittle and the conductivity rate will decrease.

In an embodiment, the method includes the following steps:
(1) placing an electrode sheet vertically into an aluminum laminated film packaging a solution for preparing a gel electrolyte for 20-30 h, then taking the electrode sheet out, and wiping the surface of the electrode sheet with dustless paper, so as to complete dip coating of the electrode sheet;
(2) placing the electrode sheet after dip coating in step (1) into an aluminum laminated film, placing the same at 70-75°C for in-situ polymerization for 24 h, then taking the electrode sheet out and wiping an electrode tab with dimethyl sulfoxide;
(3) wrapping the electrode sheet after in-situ polymerization in step (2) with dustless paper, and placing the same into an oven for vacuum drying at 80-85°C, so as to obtain an electrode sheet including a gel electrolyte.

In an embodiment, the present disclosure provides an electrode sheet including a gel electrolyte prepared by the method according to an embodiment.

In an embodiment, the present disclosure provides a semi-solid battery, and at least one of a positive electrode sheet or a negative electrode sheet of the semi-solid battery uses the electrode sheet including a gel electrolyte according to an embodiment.

In an embodiment, the semi-solid battery includes at least one of a pouch battery, a cylindrical battery and a square aluminum-case battery.

In an embodiment, the semi-solid battery is a pouch battery.

In an embodiment, an assembly method of the semi-solid battery includes a lamination method and/or a winding method.

In an embodiment, a preparation method of the semi-solid battery includes assembling the positive electrode sheet and the negative electrode sheet by winding or laminating, then subjecting the same to liquid injection, standing at 40-50°C and then formation, so as to obtain the semi-solid battery; there is no limitation on the processes of liquid injection and formation.

### BRIEF DESCRIPTION OF DRAWINGS

The accompanying drawings are used to provide a further understanding of the technical solutions of the present disclosure, constitute a part of the specification, explain the technical solutions of the present disclosure in conjunction with examples of the present application, and have no limitation on the technical solutions of the present disclosure.
FIG. 1 is a preparation flow diagram of a negative electrode sheet including a gel electrolyte in an example of the present disclosure;
FIG. 2 is a SEM+EDX image showing the surface of a negative electrode sheet in an example of the present disclosure;
FIG. 3 is a SEM image showing the surface of a negative electrode sheet in an example of the present disclosure, in which the boxed area is denoted as area A, that is, the lower area;
FIG. 4 is a SEM image showing the surface of a negative electrode sheet in an example of the present disclosure, in which the boxed area is denoted as area B, that is, the upper area;
FIG. 5 is a comparison graph showing rate capability performances of a semi-solid battery (a PVCAgel NCM-Gr battery) in an example of the present disclosure and a liquid NCM-Cr battery in Comparative Example 1;
FIG. 6 is an optical image showing an acupuncture safety test of a semi-solid battery (a PVCA gel NCM-Gr battery) in an example of the present disclosure;
FIG. 7 is an optical image showing an acupuncture safety test of a liquid NCM-Cr battery in Comparative Example 1 of the present disclosure;
FIG. 8 is a comparison graph showing cycle performances of a semi-solid battery (a PVCA gel NCM-Gr battery) in an example of the present disclosure and a liquid NCM-Cr battery in Comparative Example 1.

### DETAILED DESCRIPTION

The technical solutions of the present disclosure will be further described below with reference to the accompanying drawings and through specific embodiments. It should be apparent to those skilled in the art that the embodiments are merely used for a better understanding of the present disclosure, and should not be regarded as a specific limitation of the present disclosure.

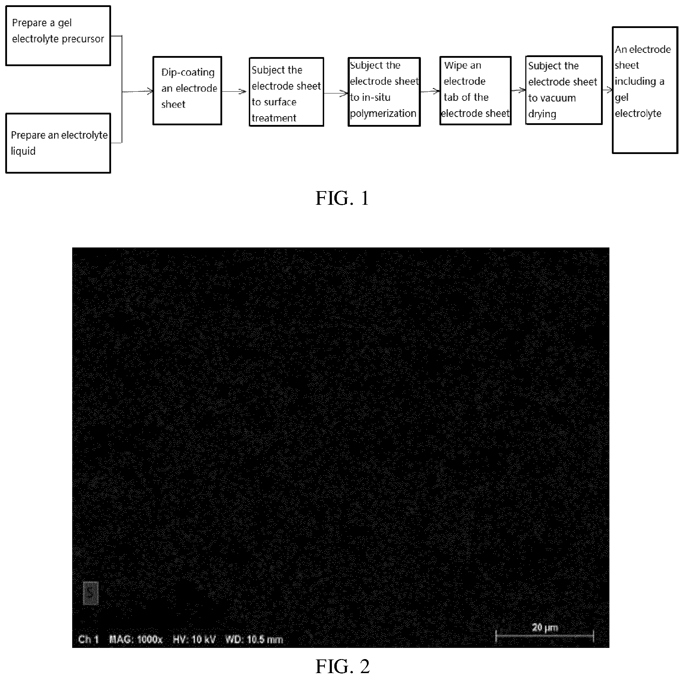

In an embodiment, the present disclosure provides a preparation method of an electrode sheet including a gel electrolyte, and the preparation flow diagram of the method is shown in FIG. 1, which includes the following steps:
(a) a gel electrolyte precursor and an electrolyte liquid are prepared;
(b) the gel electrolyte precursor and the electrolyte liquid are mixed to give a mixed solution, and the mixed solution is packaged in an aluminum laminated film;
(c) an electrode sheet is placed vertically into the aluminum laminated film in step (b) for dip coating of the electrode sheet;
(d) the electrode sheet is subjected to surface treatment after dip coating, and that is, the surface of the electrode sheet is wiped with dustless paper;
(e) the electrode sheet in step (d) is placed into a new aluminum laminated film for in-situ polymerization;
(f) an electrode tab of the electrode sheet after in-situ polymerization is wiped; and
(g) the electrode sheet in step (f) is subjected to vacuum drying, so as to obtain an electrode sheet including a gel electrolyte; the gel electrolyte has an elastic porous structure.

The typical but non-limiting examples of the present disclosure are described below.

### Example 1

In this example, a gel electrolyte precursor included the following components: a gel skeleton monomer, a flexible additive, a crosslinking agent, a polymerization initiator and a lithium salt;
wherein, the gel skeleton monomer was vinylene carbonate;
the flexible additive was poly(ethylene glycol) methacrylate with a molecular weight of 3500;
the crosslinking agent was 1,6-hexanediol diacrylate;
the polymerization initiator was azobisisobutyronitrile; and
the lithium salt was lithium bis(trifluoromethanesulfonyl)imide.

Based on that a total molar amount of the gel skeleton monomer, the flexible additive, the crosslinking agent and the polymerization initiator was 100%, the gel electrolyte precursor included the following components:
gel skeleton monomer 85%
flexible additive 7%
crosslinking agent 7%
polymerization initiator 1%;

A ratio of a molar amount of the lithium salt to a volume of the gel skeleton monomer was 0.5 mol/L.

Components of an electrolyte liquid: a solvent with a volume ratio of EC:DMC:EMC=2:4:4, LiPF₆ with a content of 1.15 mol/L, and 7% FEC.

A mass ratio of the gel electrolyte precursor to the electrolyte liquid was 1:1 for mixing.

Positive electrode sheet: a current collector was an aluminum foil of 12 µm, a positive electrode active material was NCM622, a binder was PVDF 5130, and a conductive agent was SP.

Negative electrode sheet: a current collector was a copper foil of 8 µm, a negative electrode active material was a mixture of artificial graphite and nature graphite, a conductive agent was SP, and a binder was CMC&SBR.

Preparation method of a negative electrode sheet including a gel electrolyte:
(1) a prepared negative electrode sheet was placed vertically into an aluminum laminated film packaging a solution for preparing a gel electrolyte, hold vertically for 24 h, then taken the electrode sheet out, and wiped on the surface with dustless paper, so as to complete dip coating of the electrode sheet;
(2) the negative electrode sheet after dip coating in step (1) was placed into a new aluminum laminated film, placed at 75°C for in-situ polymerization for 24 h, and then taken the electrode sheet out, and an electrode tab was wiped with dimethyl sulfoxide; and
(3) the electrode sheet after in-situ polymerization in step (2) was wrapped with dustless paper, and placed into an oven for vacuum drying at 85°C for 24 h, so as to obtain an electrode sheet including a gel electrolyte.

A preparation method of the positive electrode sheet including a gel electrolyte differs from the method of the negative electrode sheet merely in that the in-situ polymerization condition was replaced with in-situ polymerization at 75°C for 17 h; different ovens were used to avoid cross-contamination, and other conditions were the same.

Assembling a semi-solid battery:
In this example, a semi-solid battery was prepared by lamination; after lamination, the semi-solid battery was obtained through liquid injection (1.5 g/Ah), standing at 45°C and formation, which was denoted as a polymer Vinylene Carbonate (PVCA) gel NCM-Gr battery.

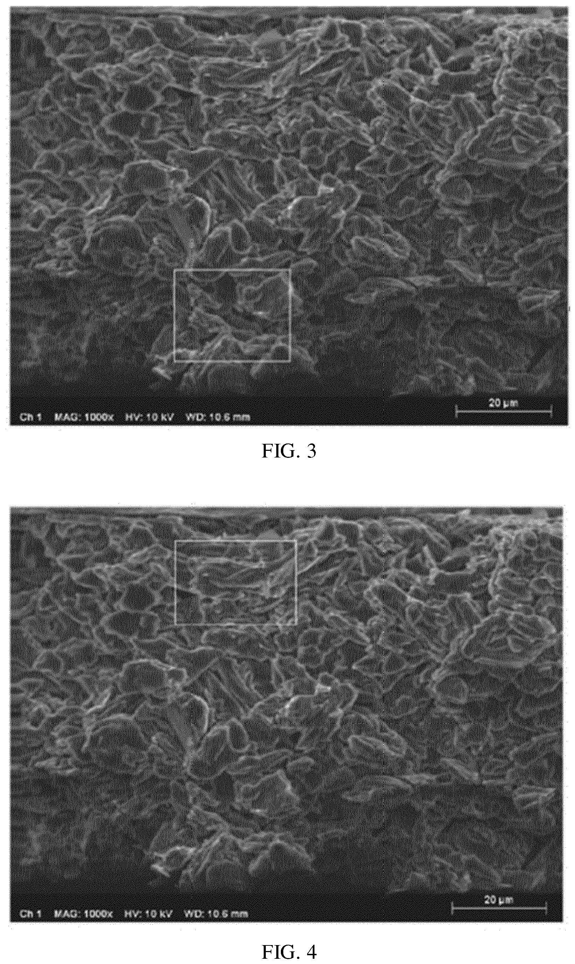

The negative electrode sheet including a gel electrolyte prepared in Example 1 was tested for the uniformity of the gel formation, and the test method was SEM+EDX; the S element in LiTFSI was used for determination, the electron microscope image was shown in FIG. 2, and it can be seen from the SEM+EDX image that the S element was uniformly distributed, and the gel was formed uniformly from top to bottom in the electrode sheet; the element percentage was used for determination, and as shown in FIG. 3 (the lower area) and FIG. 4 (the upper area), on the same electrode sheet, S element contents of the upper and lower areas are respectively the upper part: 2.15%, the lower part: 1.98%; in the range of 2±0.2%; the gel was formed very uniformly.

The element distribution table of the lower area in FIG. 3 is shown in Table 1:

**Table 1**

| Element | Atomic Number | Net Value | Mass (%) | Normalized Mass (%) | Atom |
|---|---|---|---|---|---|
| C | 6 | 412171 | 89.31 | 89.31 | 92.54 |
| N | 7 | 1384 | 2.05 | 2.05 | 1.82 |
| O | 8 | 8466 | 4.46 | 4.46 | 3.47 |
| F | 9 | 6677 | 2.04 | 2.04 | 1.34 |
| S | 16 | 13464 | 2.15 | 2.15 | 0.83 |
| | | Total: | 100.00 | 100.00 | 100.00 |

The element distribution table of the upper area in FIG. 4 is shown in Table 2:

**Table 2**

| Element | Atomic Number | Net Value | Mass (%) | Normalized Mass (%) | Atom |
|---|---|---|---|---|---|
| C | 6 | 193057 | 86.54 | 86.54 | 91.57 |
| N | 7 | 579 | 1.5 | 1.5 | 1.36 |
| O | 8 | 4545 | 4.15 | 4.15 | 3.30 |
| F | 9 | 3019 | 1.6 | 1.6 | 1.07 |
| Si | 14 | 17389 | 4.23 | 4.23 | 1.91 |
| S | 16 | 8358 | 1.98 | 1.98 | 0.79 |
| | | Total: | 100.00 | 100.00 | 100.00 |

### Example 2

This example differs from Example 1 in that, based on that a total molar amount of the gel skeleton monomer, the flexible additive, the crosslinking agent and the polymerization initiator was 100%, the gel electrolyte precursor included the following components:
gel skeleton monomer 50%
flexible additive 20%
crosslinking agent 20%
polymerization initiator 10%;
a ratio of a molar amount of the lithium salt to a volume of the gel skeleton monomer was 2 mol/L; and
other parameters and conditions were identical with those in Example 1.

### Example 3

This example differs from Example 1 in that, based on that a total molar amount of the gel skeleton monomer, the flexible additive, the crosslinking agent and the polymerization initiator was 100%, the gel electrolyte precursor included the following components:
gel skeleton monomer 99.7%
flexible additive 0.1%
crosslinking agent 0.1%
polymerization initiator 0.1%;
a ratio of a molar amount of the lithium salt to a volume of the gel skeleton monomer was 0.1 mol/L; and
other parameters and conditions were identical with those in Example 1.

### Example 4

This example differs from Example 1 in that, based on that a total molar amount of the gel skeleton monomer, the flexible additive, the crosslinking agent and the polymerization initiator was 100%, the gel electrolyte precursor included the following components:
gel skeleton monomer 65%
flexible additive 15%
crosslinking agent 15%
polymerization initiator 5%;
a ratio of a molar amount of the lithium salt to a volume of the gel skeleton monomer was 1.5 mol/L; and
other parameters and conditions were identical with those in Example 1.

### Example 5

This example differs from Example 1 in that the mass ratio of the gel electrolyte precursor to the electrolyte liquid was replaced with 9:1 from 1:1, and other parameters and conditions were identical with those in Example 1.

### Example 6

This example differs from Example 1 in that the mass ratio of the gel electrolyte precursor to the electrolyte liquid was replaced with 1:9 from 1:1, and other parameters and conditions were identical with those in Example 1.

### Example 7

This example differs from Example 1 in that the gel skeleton monomer was replaced with an equimolar amount of maleic anhydride, and other parameters and conditions were identical with those in Example 1.

### Example 8

This example differs from Example 1 in that the gel skeleton monomer was replaced with an equimolar amount of methyl methacrylate, and other parameters and conditions were identical with those in Example 1.

### Example 9

This example differs from Example 1 in that the gel skeleton monomer was propenyl-1,3-sultone, the flexible additive was methoxy polyethylene glycol acrylate with a molecular weight of 3000, the crosslinking agent was trimethylolpropane ethoxylate triacrylate, the polymerization initiator was azobisisoheptanenitrile, and the lithium salt was lithium perchlorate, and other parameters and conditions were identical with those in Example 1.

### Example 10

This example differs from Example 1 in that the gel skeleton monomer was vinylethylene carbonate, the flexible additive was 2,3-epoxypropyl acrylate with a molecular weight of 3000, the crosslinking agent was propoxylated trimethylolpropane triacrylate, and the lithium salt was lithium bis(oxalato)borate, and other parameters and conditions were identical with those in Example 1.

### Example 11

This example differs from Example 1 in that the flexible additive was poly(ethylene glycol) diacrylate with a molecular weight of 3000, the crosslinking agent was pentaerythritol tetraacrylate, and the lithium salt was lithium bisfluorosulfonimide, and other parameters and conditions were identical with those in Example 1.

### Example 12

This example differs from Example 1 merely in the coating method used in the preparation process of the negative and positive electrode sheets including a gel electrolyte, which means dip coating was not used; the mixed solution of the gel electrolyte precursor and the electrolyte liquid was coated on the surface of the electrode sheet, then subjected to in-situ polymerization, and baked, so as to obtain a negative electrode sheet including a gel electrolyte and a positive electrode sheet including a gel electrolyte, and other parameters and conditions were identical with those in Example 1.

In this example, the gel electrolyte precursor was coated on the surface of the positive electrode sheet by a coating method; after in-situ polymerization, the elemental analysis result of SEM+EDX showed that the surface of the electrode sheet had a high content of gel electrolyte, while the bottom of the electrode sheet (the side near the current collector) had an electrolyte content of 0% approximately; after coating, the upper and bottom of the electrode sheet had an non-uniform content, failing to achieve complete wetting.

### Comparative Example 1

This comparative example differs from Example 1 merely in that the positive and negative electrode sheets had no gel electrolyte, and the prepared positive and negative electrode sheets were directly subjected to lamination, then liquid injection (2.65 g/Ah), standing and formation, so as to obtain a liquid battery, which was denoted as a liquid NCM-Gr battery.

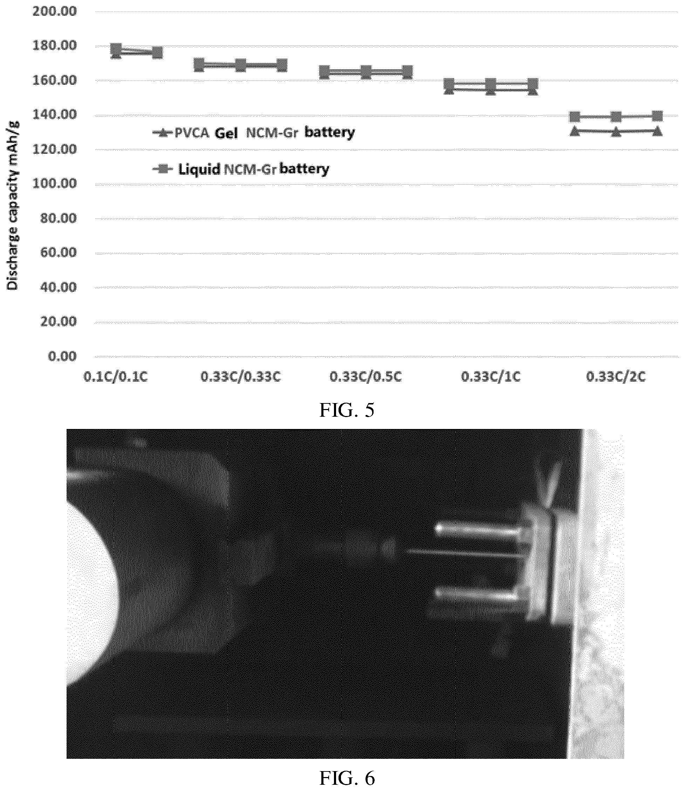

The comparison graph showing the test results of battery rate capability performance in Example 1 and Comparative Example 1 is shown in FIG. 5. It can be seen from FIG. 5 that the gel electrolyte battery of the present disclosure has little difference with the traditional liquid battery in terms of rate capability performance, which shows little difference at 0.33C, 0.5C and 1C rate, and realizes about 95% performance of the traditional liquid at 2C rate, and there is little difference.

The test results of the battery charge-discharge capacity and initial efficiency in Example 1 and Comparative Example 1 are shown in Table 3;

**Table 3**

| | Charge Capacity (Ah) | Discharge Capacity (Ah) | Initial Efficiency (%) |
|---|---|---|---|
| Liquid NCM-Gr battery | 0.42 | 0.34 | 80.66% |
| PVCA gel NCM-Gr battery | 0.43 | 0.34 | 80.52% |

It can be seen from Table 3 that, under the same system, the PVCA gel electrolyte battery and the traditional NCM-Gr battery are the same in charge capacity, discharge capacity and initial efficiency, and there is no difference, indicating that the gel material of the present disclosure has no side effects on the battery.

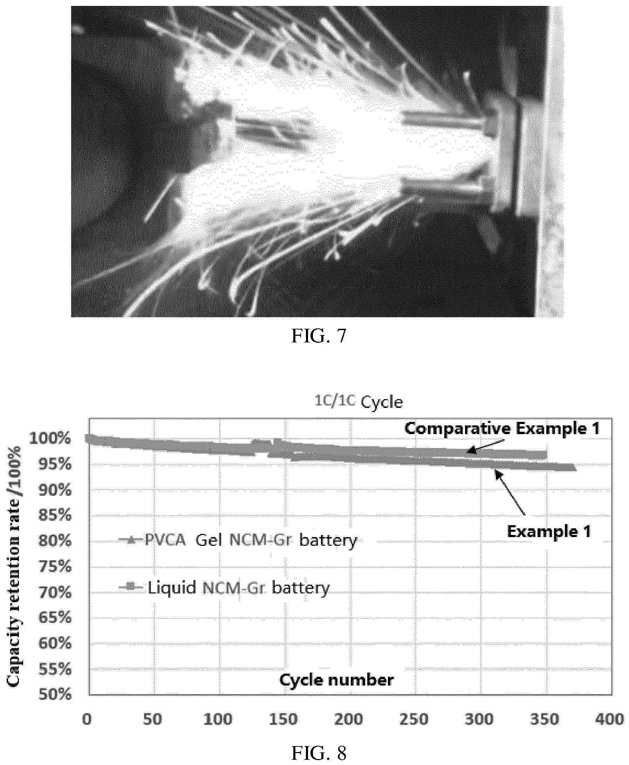

The optical images of the battery acupuncture safety test in Example 1 and Comparative Example 1 are shown in FIG. 6 and FIG. 7, respectively. As can be seen from the comparison of FIG. 6 and FIG. 7, the semi-solid battery in Example 1 can pass the acupuncture test, while a fire broke out during the acupuncture in Comparative Example 1; the results show that the semi-solid battery prepared by using the gel electrolyte precursor of the present disclosure has higher safety performance.

The curves of the battery cycle performance test in Example 1 and Comparative Example 1 are shown in FIG. 8. It can be seen from FIG. 8 that, under the same system, there is little difference when subjecting the PVCA gel NCM-Gr electrolyte battery and the liquid NCM-Gr battery to cycles; the capacity retention rate was 95% after subjecting the PVCA gel NCM-Gr electrolyte battery to 350 cycles, and the capacity retention rate was 96.5% after subjecting the liquid NCM-Gr battery to 350 cycles.

### Comparative Example 2

This comparative example differs from Example 1 in that the gel electrolyte precursor had no flexible additive, and other parameters and conditions were identical with those in Example 1.

### Comparative Example 3

This comparative example differs from Example 1 in that the gel electrolyte precursor had no crosslinking agent, and other parameters and conditions were identical with those in Example 1.

### Comparative Example 4

This comparative example differs from Example 1 in that the gel electrolyte precursor had no lithium salt, and other parameters and conditions were identical with those in Example 1.

### Comparative Example 5

This comparative example differs from Example 1 in that the lithium salt in Example 1 was replaced with LiPF₆, and other parameters and conditions were identical with those in Example 1.

This comparative example used LiPF₆ as a lithium salt of the gel electrolyte precursor; after gelation at 75°C, the gel could not be fully formed, a part of material was still liquid, and the color changed to dark-brown.

### Comparative Example 6

This comparative example differs from Example 1 in that the molecular weight of the flexible additive was replaced by 7500, and other parameters and conditions were identical with those in Example 1.

Performance testing:
The batteries prepared in examples and comparative examples were tested for rate capability performance, initial efficiency, cycle performance and safety performance (acupuncture test), and the test results are shown in Table 3.

In the test, rate capability performance test conditions:
a) constant-current and constant-voltage charging: 0.33C CC 4 h to 4.25 V, CV to 0.05C;
b) standing for 5 min;
c) constant-current discharging: 0.33C DC to 2.5 V;
d) standing for 5 min;
e) constant-current and constant-voltage charging: 0.33C CC 4 h to 4.25 V, CV to 0.05C;
f) standing for 5 min; and
g) constant-current discharging: 1C DC to 2.5 V.

The rate capability performance of 1C/0.33C was obtained by the test, and the test parameters of rate capability performance under other circumstances, such as 0.1C/0.1C, 0.33C/0.33C, 0.33/0.5C and 0.33/2C, referred to the above conditions.

The initial efficiency test conditions: at an ambient temperature of 25°C;
a) constant-current and constant-voltage charging: 0.05C CC 22 h to 4.25 V, CV to 0.01C;
b) standing for 10 min; and
c) constant-current discharging: 0.05C DC to 2.5 V.

Cycle performance test conditions: at a test temperature of 25°C;
a) constant-current and constant-voltage charging: 1C CC to 4.25 V, CV to 0.05C;
b) standing for 5 min; c) constant-current discharging: 1C DC to 2.5 V; and
d) step a)-step c) were performed circularly for 100 times.

Safety performance (acupuncture test) conditions:
with reference to GBT31485-2015 Safety requirements and test methods for traction battery of electric vehicle, the steps are as follows:
a) a single cell was charged;
b) with a ϕ6.5 mm high-temperature resistance steel needle (a cone angle of the needle tip was 50°, and the needle surface was smooth and had no rust, oxide layer or oil stains), the cell was penetrated at a speed of 25 mm/s from a direction perpendicular to the storage battery plate, the penetration position was close to the geometric center of the pierced surface, and the steel needle stayed in the cell; and
c) observation for 1 h.

The test results are shown in Table 4;

**Table 4**

| | 1C/0.33C | Initial Efficiency % | Retention Rate after 100 Cycles % | Acupuncture Test |
|---|---|---|---|---|
| Example 1 | 92.5% | 80.52% | 97.5% | Passed |
| Example 2 | 86.3% | 72.6% | 75.8% | Passed |
| Example 3 | 73.2% | 73.5% | 78.9% | Passed |
| Example 4 | 69.6% | 73.4% | 82.6% | Passed |
| Example 5 | 69.4% | 75% | 93.2% | Passed |
| Example 6 | 76.9% | 72.6% | 82.6% | Passed |
| Example 7 | 76.9% | 71.4% | 79.4% | Passed |
| Example 8 | 86.4% | 69.4% | 79.6% | Passed |
| Example 9 | 90.3% | 80.2% | 95.2% | Passed |
| Example 10 | 90.7% | 79.3% | 96.9% | Passed |
| Example 11 | 90.6% | 80.0% | 95.3 % | Passed |
| Example 12 | 90.6% | 75.42% | 94.2% | Passed |
| Comparative Example 1 | 93.2% | 80.66% | 98.3% | Failed |
| Comparative Example 2 | Failed to form gel | | | Failed |
| Comparative Example 3 | Failed to form gel | | | Failed |
| Comparative Example 4 | 65.6% | 68.42% | 74.9% | Passed |
| Comparative Example 5 | Failed to fully form gel, and changed to black in color | | | Failed |
| Comparative Example 6 | 63.5% | 73.5% | 63.5% | Failed |

As can be seen from Table 4, the battery is significantly improved in safety, which is assembled from the gel electrolyte obtained by mixing the gel electrolyte precursor of the present disclosure and the electrolyte liquid and subjecting the same to in-situ polymerization gelation, and the prepared semi-solid battery can realize electrical performances similar to that of the liquid battery, which achieves the effect of improving the battery safety while maintaining high electrical performances.

As can be seen from the comparison of Examples 1-4, the content of each component in the gel electrolyte precursor of the present disclosure will affect the performance of the semi-solid battery; when the content of each component meets the following conditions, the prepared semi-solid battery will have more significant improvements in the electrical performances and safety performance: based on that a total molar amount of the gel skeleton monomer, the flexible additive, the crosslinking agent and the polymerization initiator is 100%, the gel electrolyte precursor includes the following components: the gel skeleton monomer with a mole percentage of 80-95%, the flexible additive with a mole percentage of 2-10%, the crosslinking agent with a mole percentage of 2-10%, and the polymerization initiator with a mole percentage of 0.1-3%.

As can be seen from the comparison of Examples 1 and 5-6, when a mass ratio of the gel electrolyte precursor to the electrolyte liquid is 0.1:9.9-9.9:0.1, high electrochemical performances and safety performance can be obtained; when the mass ratio is 4:6-6:4, the improvement effect is better; when the mass ratio is 1:1, the improvement effect is the best.

As can be seen from the comparison of Examples 1 and 7-8, the semi-cell has better performance when uses vinylene carbonate as the gel skeleton monomer than those using maleic anhydride or methyl methacrylate.

As can be seen from the comparison of Examples 1 and 9-11, the gel electrolytes, which are prepared by using the above gel skeleton monomers, flexible additives, crosslinking agents and lithium salts, all have high electrical performances and safety performance; for the optimal selection, the gel skeleton monomer is vinylene carbonate, the flexible additive is poly(ethylene glycol) methacrylate with a molecular weight of less than or equal to 5000, the crosslinking agent is 1,6-hexanediol diacrylate, the polymerization initiator is azobisisobutyronitrile, and the lithium salt is lithium bis(trifluoromethanesulfonyl)imide.

As can be seen from the comparison of Examples 1 and 12, the method of the present disclosure uses dip coating, which is more conducive to improving the battery in electrochemical performance.

As can be seen from the comparison of Example 1 and Comparative Example 1, the battery, which is assembled from the gel electrolyte prepared by the gel electrolyte precursor of the present disclosure, can realize electrical performances similar to the liquid battery, and even has higher safety performance.

For Comparative Examples 2-4, in Comparative Example 2, gel cannot be formed without flexibility additive, and in the absence of flexibility additive, the polymerization of skeleton monomers will increase the crystallinity of material, resulting in material pulverizing and precipitating; in Comparative Example 3, gel can be formed without crosslinking agent, and in the absence of crosslinking agent, the skeleton monomers and flexible monomers can be polymerized, but cannot form the crosslinking structure, so that the electrolyte liquid cannot be hold; in Comparative Example 4, gel can be formed without lithium salt, but the conductivity of the gel system will decrease, the performance will be worse compared with those added lithium salt.

As can be seen from the comparison of Example 1 and Comparative Example 6, when the molecular weight of the flexible additive is greater than 5000, the safety performance of the gel electrolyte is obviously deteriorated.

## Claims

1. A gel electrolyte precursor, comprising a gel skeleton monomer, a flexible additive, a crosslinking agent, a polymerization initiator and a lithium salt; the gel skeleton monomer comprises at least one of vinylene carbonate, vinylethylene carbonate, propenyl-1,3-sultone, methyl methacrylate and maleic anhydride; the flexible additive is selected from a polyacrylate material containing double bonds, a molecular weight of which is less than or equal to 5000.

2. The gel electrolyte precursor according to claim 1, wherein the flexible additive is at least one of poly(ethylene glycol) methacrylate, poly(ethylene glycol) diacrylate, methoxy polyethylene glycol acrylate, trimethylolpropane ethoxylate triacrylate, propoxylated trimethylolpropane triacrylate and 2,3-glycidyl acrylate, a molecular weight of which is less than or equal to 5000.

3. The gel electrolyte precursor according to claim 1, wherein the gel skeleton monomer is vinylene carbonate.

4. The gel electrolyte precursor according to any one of claims 1 to 3, wherein the flexible additive is trimethylolpropane ethoxylate triacrylate and propoxylated trimethylolpropane triacrylate.

5. The gel electrolyte precursor according to any one of claims 1 to 3, wherein the crosslinking agent is selected from an acrylate material containing two or more double bonds.

6. The gel electrolyte precursor according to claim 5, wherein the crosslinking agent is at least one of 1,6-hexanediol diacrylate, triethylene glycol diacrylate, trimethylolpropane ethoxylate triacrylate, propoxylated trimethylolpropane triacrylate and pentaerythritol tetraacrylate.

7. The gel electrolyte precursor according to any one of claims 1 to 6, wherein the polymerization initiator is selected from azobisisobutyronitrile and/or azobisisoheptanenitrile.

8. The gel electrolyte precursor according to any one of claims 1 to 7, wherein the polymerization initiator is azobisisobutyronitrile.

9. The gel electrolyte precursor according to any one of claims 1 to 8, wherein the lithium salt is selected from at least one of lithium perchlorate, lithium bis(trifluoromethanesulfonyl)imide, lithium bisfluorosulfonimide, lithium bis(oxalato)borate and lithium tetrafluoroborate.

10. The gel electrolyte precursor according to claim 9, wherein the lithium salt is lithium bis(trifluoromethanesulfonyl)imide.

11. The gel electrolyte precursor according to any one of claims 1 to 10, wherein, based on that a total molar amount of the gel skeleton monomer, the flexible additive, the crosslinking agent and the polymerization initiator is 100%, the gel electrolyte precursor comprises the following components:
gel skeleton monomer 50-99.9%
flexible additive 0.1-50%
crosslinking agent 0.1-50%
polymerization initiator 0.1-10%.

12. The gel electrolyte precursor according to claim 11, wherein a ratio of a molar amount of the lithium salt to a volume of the gel skeleton monomer is 0.1-2 mol/L.

13. The gel electrolyte precursor according to claim 11 or 12, wherein, based on that a total molar amount of the gel skeleton monomer, the flexible additive, the crosslinking agent and the polymerization initiator is 100%, the gel electrolyte precursor comprises the following components:
gel skeleton monomer 80-95%
flexible additive 2-10%
crosslinking agent 2-10%
polymerization initiator 0.1-3%.

14. A solution for preparing a gel electrolyte, comprising the gel electrolyte precursor according to any one of claims 1 to 13 and an electrolyte liquid.

15. The solution for preparing a gel electrolyte according to claim 14, wherein, in the solution for preparing a gel electrolyte, a mass ratio of the gel electrolyte precursor to the electrolyte liquid is 0.1:9.9-9.9:0.1.

16. The solution for preparing a gel electrolyte according to claim 15, wherein, in the solution for preparing a gel electrolyte, the mass ratio of the gel electrolyte precursor to the electrolyte liquid is 4:6-6:4.

17. The solution for preparing a gel electrolyte according to claim 14, wherein, the solution for preparing a gel electrolyte is prepared by a method, which comprises mixing the gel electrolyte precursor and an electrolyte liquid, so as to obtain the solution for preparing a gel electrolyte.

18. A preparation method of a gel electrolyte, comprising subjecting the solution for preparing a gel electrolyte according to any one of claims 14 to 17 to in-situ-polymerization gelation, and then baking the same, so as to obtain a gel electrolyte.

19. The preparation method of a gel electrolyte according to claim 18, wherein a temperature of the in-situ-polymerization gelation is 70-75°C.

20. The preparation method of a gel electrolyte according to claim 18 or 19, wherein the baking is vacuum baking, a vacuum degree of the vacuum baking is less than or equal to 0.1 kPa, and a temperature of the baking is 80-85°C.

21. A gel electrolyte prepared by the method according to any one of claims 18 to 20, wherein the gel electrolyte has a porous structure.

22. The gel electrolyte according to claim 21, wherein the gel electrolyte has an elastic porous structure.

23. A preparation method of an electrode sheet including a gel electrolyte, comprising: coating an electrode sheet with the solution for preparing a gel electrolyte according to any one of claims 14 to 17, subjecting the same to in-situ polymerization, and drying the same, so as to obtain an electrode sheet including a gel electrolyte.

24. The preparation method of an electrode sheet including a gel electrolyte according to claim 23, wherein the electrode sheet comprises a positive electrode sheet and/or a negative electrode sheet.

25. The preparation method of an electrode sheet including a gel electrolyte according to claim 23 or 24, wherein a method of the coating comprises dip coating;
preferably, the dip coating comprises placing the electrode sheet into a solution for preparing a gel electrolyte;
preferably, the electrode sheet is vertically placed in a solution for preparing a gel electrolyte; preferably, the method further comprises wiping the surface of the electrode sheet after the dip coating, and the wiping is preferably performed with dustless paper.

26. The preparation method of an electrode sheet including a gel electrolyte according to any one of claims 23 to 25, wherein a temperature of the in-situ polymerization is 70-75°C;
preferably, a time of the in-situ polymerization is 16-32 h.

27. The preparation method of an electrode sheet including a gel electrolyte according to any one of claims 23 to 26, wherein the method further comprises wiping an electrode tab of the electrode sheet after the in-situ polymerization, and a solvent is dimethyl sulfoxide for wiping the electrode tab of the electrode sheet.

28. The preparation method of an electrode sheet including a gel electrolyte according to any one of claims 23 to 27, wherein the drying is vacuum drying, and a temperature of the drying is 80-85°C.

29. The preparation method of an electrode sheet including a gel electrolyte according to any one of claims 23 to 28, wherein the method comprises the following steps:
(1) placing an electrode sheet vertically into an aluminum laminated film packaging a solution for preparing a gel electrolyte for 20-30 h, then taking the electrode sheet out, and wiping the surface of the electrode sheet with dustless paper, so as to complete dip coating of the electrode sheet;
(2) placing the electrode sheet after dip coating in step (1) into an aluminum laminated film, placing the same at 70-75°C for in-situ polymerization for 24 h, then taking the electrode sheet out and wiping an electrode tab with dimethyl sulfoxide;
(3) wrapping the electrode sheet after in-situ polymerization in step (2) with dustless paper, and placing the same into an oven for vacuum drying at 80-85°C, so as to obtain an electrode sheet including a gel electrolyte.

30. An electrode sheet including a gel electrolyte prepared by the method according to any one of claims 23 to 29.

31. The electrode sheet including a gel electrolyte according to claim 30, wherein the gel electrolyte on the electrode sheet including a gel electrolyte has a porous structure.

32. The electrode sheet including a gel electrolyte according to claim 30 or 31, wherein the gel electrolyte on the electrode sheet including a gel electrolyte has an elastic porous structure.

33. A semi-solid battery, wherein at least one of a positive electrode sheet or a negative electrode sheet of the semi-solid battery uses the electrode sheet including a gel electrolyte according to any one of claims 30 to 32.

34. The semi-solid battery according to claim 33, wherein the semi-solid battery comprises at least one of a pouch battery, a cylindrical battery and a square aluminum-case battery, and the semi-solid battery is preferably a pouch battery.
